# EUROPÄISCHE PATENTSCHRIFT

(11) **EP 2 207 018 B1**
(45) Veröffentlichungstag und Bekanntmachung des Hinweises auf die Patenterteilung: **28.08.2013**
(21) Anmeldenummer: 09015566.4
(22) Anmeldetag: 16.12.2009
(51) Int. Cl.: G01G 19/414

(54) **Wägeeinrichtung**
Weighing device
Dispositif de pesée

(30) Priorität: 13.01.2009 DE 102009004411
(43) Veröffentlichungstag der Anmeldung: 14.07.2010
(73) Patentinhaber: Bizerba GmbH & Co. KG, 72336 Balingen (DE)
(72) Erfinder: Acker, Horst, 72351 Geislingen (DE); Pilger, Frank, 73728 Esslingen (DE)
(74) Vertreter: Manitz, Finsterwald & Partner GbR

(56) Entgegenhaltungen:
- WO-A2-2008/118906
- DE-U1- 20 302 399
- JP-A- 2004 334 731
- US-A1- 2003 015 585

## Beschreibung

Die vorliegende Erfindung betrifft eine Wägeeinrichtung mit wenigstens einer Ladenwaage zum Bereitstellen von digitalen Dateninhalten, insbesondere Medieninhalten, zu in einem Einzelhandelsgeschäft zum Verkauf angebotenen Waren.

Es wird derzeit darüber nachgedacht, Wägeeinrichtungen, insbesondere Waagen an einer Wurst-, Fleisch-, Fisch- und/oder Käsetheke in einem Supermarkt oder einem Ladengeschäft, mit Zusatzfunktionalitäten zu versehen. Insbesondere wird überlegt, an einem Display einer Wägeeinrichtung, einem Kunden, d.h. dem Käufer einer Ware, Zusatzinformation zu der jeweils gewägten Ware anzuzeigen, insbesondere automatisch. Bei solchen Zusatzinformationen, die dann in Form von digitalen Daten, insbesondere Medieninhalten, vorliegen, kann es sich beispielsweise um Hinweise auf ergänzende Produkte oder Dienstleistungen (Cross-selling), Rezeptvorschläge, Bilder, Videoclips, Inhaltsdeklarationen und/oder dergleichen handeln.

WO 2008/118906 A2 beschreibt einen Einkaufswagen mit einem Display, auf dem z.B. Werbung abgespielt werden kann. Die zugehörigen Files sind in einem Speicher abgelegt. In dem Einkaufswagen kann eine digitale Einkaufsliste hinterlegt werden. Fährt der Einkaufswagen an einem Produkt vorbei, das auf der Einkaufsliste steht, wird mittels einer Korrelationskomponente auf dem Display eine dem Produkt zugeordnete Werbung abgespielt. Die Produkte sind mit einem RFID-Tag versehen, der eine Identifikationsinformation beinhaltet, die von einem Einkaufswagen mittels eines RFID-Lesers ausgelesen werden und durch die die Produkte eindeutig gekennzeichnet sind, so dass den Produkten weitere Informationen, wie z.B. ein Preis, zugeordnet werden kann. Alternativ können die Produkte mit einem Barcode versehen sein. Die Identifikationsinformation wird gelesen, wenn die Produkte in den Einkaufswagen gelegt werden. Die so gelesenen Produkte werden dann in eine Inventarliste des Einkaufswagens aufgenommen, wobei am Ende des Einkaufs anhand der Inventarliste am POS bezahlt wird. Wenn das Gewicht des Einkaufswagens und das Gewicht der einzelnen Produkte bekannt sind, kann anhand der Inventarliste das erwartete Gesamtgewicht des Einkaufswagens samt Inhalt berechnet werden. Darüber hinaus kann der Einkaufswagen samt Inhalt mittels einer Waage gewogen werden. Unterscheidet sich das erwartete Gesamtgewicht von dem gewogenen Gesamtgewicht, wurden nicht sämtliche im Einkaufswagen befindlichen Produkte gelesen bzw. gescannt.

Der vorliegenden Erfindung liegt die Aufgabe zugrunde, eine Wägeeinrichtung der eingangs genannten Art anzugeben, die eine flexible Zuweisung der digitalen Dateninhalte zu den angebotenen Waren ermöglicht.

Diese Aufgabe wird durch eine Wägeeinrichtung mit den Merkmalen des Anspruchs 1 gelöst, und insbesondere dadurch, dass die Ladenwaage dazu ausgelegt ist, sowohl auf eine Warendatenbank, insbesondere eines computergestütztes Warenwirtschaftssystems, in der die Waren über eine jeweilige Produktkennzeichnung erfasst sind, als auch auf eine weitere Datenbank, in der die digitalen Dateninhalte hinterlegt sind, zuzugreifen, wobei die Ladenwaage Zuordnungsdaten umfasst, die eine Zuordnung der digitalen Dateninhalte zu den jeweiligen Produktkennzeichnungen festlegen, wobei die Zuordnung bearbeitbar ist, und wobei die Ladenwaage dazu ausgelegt ist, bei einem Aufruf einer Produktkennzeichnung unter Verwendung der Zuordnungsdaten einen der aufgerufenen Produktkennzeichnung zugeordneten digitalen Dateninhalt aus der weiteren Datenbank auszulesen, und den ausgelesenen digitalen Dateninhalt an einer Ausgabeeinheit der Ladenwaage auszugeben.

Der Zugriff auf die Warendatenbank ist insbesondere deshalb erforderlich, um einen der vom Kunden jeweils gewünschten Ware entsprechenden Preis bzw. einen Preis pro Gewicht zu berechnen bzw. zu ermitteln, der über einen Aufruf der jeweiligen Produktkennzeichnung abgefragt wird. Der Aufruf der jeweiligen Produktkennzeichnung hat weiterhin zur Folge, dass - insbesondere nach einer entsprechenden Benutzereingabe - ein der jeweils gewünschten Ware zugeordneter digitaler Dateninhalt, beispielsweise ein Rezept oder ein Cross-Selling-Angebot, aus der weiteren Datenbank ausgelesen und an der Ausgabeeinheit ausgegeben wird.

Die Zuordnung der jeweiligen, in der weiteren Datenbank vorhandenen digitalen Dateninhalte zu den jeweiligen Produktkennzeichnungen ist dabei durch die Zuordnungsdaten vorgegeben. Insbesondere sind die Zuordnungsdaten in einer Speichereinrichtung der Wägeeinrichtung gespeichert. Die Zuordnung kann für verschiedene Wägeeinrichtungen unterschiedlich sein. Beispielsweise kann die Zuordnung von Supermarkt zu Supermarkt verschieden sein. Insbesondere können die Zuordnungsdaten eine Zuordnung mit einer Filial-Identifikation oder Filial-Identifikationsbezeichnung umfassen oder können die Zuordnungsdaten mehrere Zuordnungen umfassen, denen jeweils eine eigene Filial-Identifikation zugeordnet ist.

Die vorgenannte Zuordnung ist bearbeitbar. Bevorzugt ist die Zuordnung mit einem Anwendungsprogramm der Wägeeinrichtung und/oder durch wenigstens einen Filter, wie er nachstehend noch näher erläutert ist, insbesondere automatisch oder manuell, bearbeitbar. Insbesondere kann der Betreiber der Wägeeinrichtung selbst auf die Zuordnung zugreifen und diese ändern und/oder ergänzen. Dies ist insbesondere dann von Vorteil, wenn vorhandene digitale Dateninhalte gegen neue bzw. andere digitale Dateninhalte ausgetauscht oder der weiteren Datenbank nur neue bzw. andere digitale Dateninhalte hinzugefügt wurden, die den Produktkennzeichnungen zugeordnet werden sollen. Es kann auch vorgesehen sein, dass ein Filter eine Bearbeitung der Zuordnung vornehmen kann, beispielsweise aufgrund von aus dem Warenwirtschaftssystem bereitgestellten Daten wie Lagerstückzahlen und/oder Umsatz.

Beispielsweise kann der Betreiber eines Supermarkts ein Interesse daran haben, einen schlecht gehenden Artikel seines Sortiments verstärkt zu bewerben. Dies kann dann dadurch gewährleistet werden, dass ein auf den jeweiligen Artikel abstellender digitaler Dateninhalt oder mehrere derartige digitale Dateninhalte vermehrt an der Ausgabeeinheit ausgegeben werden. Dies wiederum kann durch eine vermehrte Zuordnung des oder der entsprechenden digitalen Dateninhalte zu den Produktkennzeichnungen erreicht werden.

Die Wägeeinrichtung kann zwei Betriebsmodi aufweisen, wobei in einem ersten Betriebsmodus das Auslesen der zugeordneten digitalen Dateninhalte möglich und in einem zweiten Betriebsmodus die Zuordnung bearbeitbar oder editierbar ist. Bevorzugt ist während des Bearbeitens oder Editierens kein Auslesen möglich. Zur Ausführung des ersten und des zweiten Betriebsmodus kann jeweils ein eigenes Software-Modul vorgesehen sein, wobei unter dem Begriff Software-Modul insbesondere eine in sich geschlossene und/oder gekapselte Software-Komponente zu verstehen ist, welche auf der Wägeeinrichtung installiert und/oder implementiert ist, und/oder separat aufrufbar ist, und/oder eine Bedienoberfläche wie ein Menü aufweist. Vorzugsweise ist zumindest der zweite Betriebsmodus über ein separat aufrufbares Software-Modul, insbesondere das vorgenannte Anwendungsprogramm, aufrufbar.

Bei der Wägeeinrichtung kann es sich um eine einzige Waage oder um einen Verbund aus mehreren Waagen handeln. Die weitere Datenbank ist der Wägeeinrichtung zugeordnet. Bei einem Waagenverbund können mehrere Waagen auf eine gemeinsame Datenbank zugreifen oder es kann für jede Waage eine eigene Datenbank vorgesehen sein. Eine Datenbank kann beispielsweise in einem internen Speicher einer Waage oder in einem separaten externen Server vorgesehen sein.

Grundsätzlich kann die Wägeeinrichtung eine Client-Server-Architektur aufweisen. Insbesondere kann eine Waage, deren zugeordnete Ausgabeeinheit zur Ausgabe der digitalen Dateninhalte vorgesehen ist, als Client ausgebildet sein. Ein Server, insbesondere ein separater Server, der die Datenbank umfasst oder auf diese zugreifen kann, kann dann dazu ausgelegt sein, bei einem Aufruf einer Produktkennzeichnung den vorgenannten digitalen Dateninhalt wie erläutert auszulesen und an der Ausgabeeinheit auszugeben, d.h. die Ausführung dieser Schritte dem Client als Dienst zur Verfügung zu stellen.

Bevorzugt sind die Zuordnungsdaten in wenigstens einer Tabelle hinterlegt bzw. abgelegt. Die Wägeeinrichtung umfasst also wenigstens eine Tabelle, in der die Zuordnungsdaten enthalten sind. In einer Spalte der Tabelle können die Produktkennzeichnungen und in einer anderen Spalte können die digitalen Dateninhalte, Verweise auf die digitalen Dateninhalte oder Identifikationsbezeichnungen, die den jeweiligen digitalen Dateninhalt eindeutig kennzeichnen, eingetragen sein.

Vorzugsweise liegt die wenigstens eine Tabelle in Form wenigstens einer Datei vor, die insbesondere ein vorgegebenes Dateiformat besitzt, beispielsweise in Form einer csv-, Excel- oder xml-Datei. Das Dateiformat ist dann ein Tabellen-Dateiformat. Bevorzugt ist das vorgenannte Anwendungsprogramm mit dem Dateiformat verknüpft. Mit dem Anwendungsprogramm kann die wenigstens eine Datei geöffnet und die Zuordnung bearbeitet werden. Bevorzugt ist die wenigstens eine Datei austauschbar. Grundsätzlich kann es sich bei der Tabelle auch um eine Tabelle in einer Datenbank und bei der Datei um eine Datenbank-Datei handeln.

Bevorzugt umfasst die Wägeeinrichtung wenigstens einen Filter oder eine Filterfunktion und ist dazu ausgelegt, den auszulesenden digitalen Dateninhalt in Abhängigkeit von dem Filter bzw. der Filterfunktion insbesondere automatisch zu bestimmen. Der jeweilige Filter kann - wie vorstehend bereits beschrieben ist - dazu verwendet werden, die Zuordnung zu bearbeiten. Der jeweilige Filter kann auch dazu verwendet werden, aus mehreren verschiedenen digitalen Dateninhalten, die einer Produktkennzeichnung zugeordnet sind, den jeweils auszulesenden digitalen Dateninhalt auszuwählen oder vorzugeben bzw. festzulegen, oder eine Gruppe von digitalen Dateninhalten vorauszuwählen, aus der der auszulesende digitale Dateninhalt ausgewählt wird.

Vorzugsweise erlaubt der jeweilige Filter eine Filterung nach wenigstens einem Attribut. Insbesondere können mehrere Filter vorgesehen sein, die jeweils eine Filterung nach einem Attribut erlauben, oder es kann ein Filter vorgesehen sein, der jeweils eine Filterung nach mehren Attributen erlaubt. Attribute können beispielsweise "Zeit", "Lagerstückzahlen", "Umsatz", "Hersteller" und "Land" sein.

Die Zuordnung kann insbesondere derart sein, dass ein digitaler Dateninhalt mehreren verschiedenen Produktkennzeichnungen zugeordnet ist. Beispielsweise kann ein digitaler Dateninhalt zu einem verstärkt zu bewerbenden Produkt mit mehreren voneinander verschiedenen Produktkennzeichnungen verlinkt sein.

Die Zuordnung kann - wie vorstehend bereits beschrieben ist - auch derart sein, dass einer Produktkennzeichnung mehrere verschiedene digitale Dateninhalte zugeordnet sind. Hierdurch wird ermöglicht, dass auswählbar ist, welcher digitale Dateninhalt an der Ausgabeeinheit ausgegeben werden soll. Beispielsweise können einer Ware bzw. einer Produktkennzeichnung Nährwertangaben, Informationen zu Allergenen und ein Rezept zugeordnet sein, wobei ein Verkaufsmitarbeiter durch Berührung eines Touchscreens der Wägeeinrichtung, auf dem die Auswahl angezeigt wird, entsprechend dem Kundenwunsch den jeweils gewünschten digitalen Dateninhalt auswählen kann.

Insbesondere in diesem Fall ist es bevorzugt, wenn aus den mehreren verschiedenen zugeordneten digitalen Dateninhalten der jeweils auszulesende digitale Dateninhalt auswählbar ist. Die Auswahl kann jedoch nicht nur durch eine Benutzereingabe erfolgen, wie sie vorstehend erläutert ist, sondern beispielsweise auch zufällig, automatisch oder anhand einer insbesondere aus dem Warenwirtschaftssystem vorgegebenen Priorisierung, z.B. wenn eine bestimmte Ware verstärkt beworben werden soll, für welche Priorisierung wenigstens ein Filter verwendet werden kann.

Es ist auch möglich, dass die Zuordnung und/oder eine Auswahl des jeweiligen auszulesenden digitalen Dateninhalts zeitabhängig erfolgt. Dies kann beispielsweise dadurch erreicht werden, dass mehrere Tabellen der vorgenannten Art vorgesehen sind, die zeitabhängig getauscht werden. Alternativ ist es aber auch möglich, dass einer Produktkennzeichnung mehrere verschiedene digitale Dateninhalte zugeordnet sind, wobei die digitalen Dateninhalte jeweils mit einem Attributwert des Attributs "Zeit" versehen sind. Der jeweilige auszulesende digitale Dateninhalt ist dann durch einen "Zeit"-Filter vorgegeben. Beispielsweise kann ein erster zugeordneter Dateninhalt mit dem Attributwert "9-18 Uhr" und ein zweiter zugeordneter Dateninhalt mit dem Attributwert " 18-20 Uhr" gekennzeichnet sein. Die Attributwerte können in einer insbesondere eigenen Spalte der vorgenannten Tabelle eingetragen sein.

Grundsätzlich kann zur Ausbildung einer Filterfunktion zumindest ein Teil der digitalen Dateninhalte mit einem oder mehreren Attributwerten versehen sein. Beispielsweise kann das Attribut "Hersteller" verwendet werden. Damit kann erreicht werden, dass ausschließlich oder zumindest verstärkt Werbung für Produkte eines bestimmten Herstellers an der Ausgabeeinheit ausgegeben wird. Es kann auch das Attribut "Land" verwendet werden. Dann ist es möglich, länderspezifische digitale Dateninhalte an der Ausgabeeinheit auszugeben. Sofern ein Supermarkt beispielsweise eine "Italien-Woche" veranstalten möchte, können für ein Cross-Selling dann z.B. nur solche digitalen Dateninhalte ausgegeben werden, die Produkten aus Italien zugeordnet sind. Die Attributwerte eines Attributs können in einer Spalte der vorgenannten Tabelle eingetragen sein. Alternativ kann ein Attributwert aber auch Teil des jeweiligen digitalen Dateninhalts sein, insbesondere in einem Header des jeweiligen digitalen Dateninhalts enthalten sein.

Die Zuordnung kann weiterhin derart sein, dass einer Gruppe von Produktkennzeichnungen, die ein gemeinsames Merkmal besitzen, insbesondere einer Warengruppe, wenigstens ein digitaler Dateninhalt zugeordnet ist. Bei einer Warengruppe kann es sich beispielsweise um eine Hauptwarengruppe, wie Käse, Wurst, Fleisch oder Fisch, oder um eine Unterwarengruppe wie Rohmilchkäse handeln. Beispielsweise kann auf Anfrage eines Kunden ein Verkaufsmitarbeiter die Unterwarengruppe Rohmilchkäse in eine Eingabeeinheit der Wägeeinrichtung eingeben, um dem Kunden eine allgemeine Information über Rohmilchkäse anzuzeigen.

Nach einer Ausbildung der Erfindung ist die Wägeeinrichtung dazu ausgelegt, zu protokollieren, welche digitalen Dateninhalte, insbesondere wie oft, ausgegeben wurden. Insbesondere sofern Produktkennzeichnungen mehrere digitale Dateninhalte verschiedener Kategorien zugeordnet sind, kann hierdurch nachvollzogen werden, welche Kategorien von digitalen Dateninhalten von den Kunden am häufigsten verlangt werden.

Bevorzugt ist die Wägeeinrichtung dabei dazu ausgelegt ist, das Protokoll, insbesondere unter Verwendung aus dem Warenwirtschaftssystem zur Verfügung gestellter Bestandsdaten der Waren, statistisch auszuwerten und/oder an das Warenwirtschaftssystem zu übermitteln. Hierdurch wird eine Auswertung der Effektivität von Werbemaßnahmen ermöglicht.

Die digitalen Dateninhalte können als Containerdateien vorliegen, d.h. in einem Dateiformat, das verschiedenartige Datenformate enthalten kann, beispielsweise Video-, Audio-, Bild- und/oder Textdaten.

Die ausgelesenen digitalen Dateninhalte können visuell oder audiovisuell an einer Anzeigeeinheit der Wägeeinrichtung ausgegeben werden, insbesondere an einem Bildschirm, einem Display oder einem Touchscreen. Es ist aber auch möglich, dass die digitalen Dateninhalte an einem insbesondere über eine Schnittstelle anbindbaren Drucker ausgegeben werden. Damit können z.B. Werbeprospekte oder Plakate zur Vermarktung von speziellen Waren, insbesondere zu aktuellen Aktionen zur Verkaufsförderung, gedruckt werden.

Die Wägeeinrichtung kann zumindest zwei Bedienerschnittstellen, insbesondere Ausgabeeinheiten, insbesondere Displays umfassen, wobei bevorzugt eine erste Bedienerschnittstelle ein Touchscreen-Display für einen Verkaufsmitarbeiter und eine zweite Bedienerschnittstelle ein Kunden-Display umfasst. An dem Touchscreen-Display können Bedienermenüs angezeigt und Menüpunkte ausgewählt werden. An dem Kunden-Display kann Wareninformation angezeigt werden.

Die Wägeeinrichtung kann ferner eine Grafikeinheit, insbesondere einen Grafikprozessor, umfassen, die zur Steuerung und/oder Berechnung der Displayausgaben der vorgenannten Displays vorgesehen ist. Vorzugsweise weist die Grafikeinheit eine Schnittstelle zum Anschließen eines weiteren Ausgabegeräts, insbesondere eines Fernsehgeräts, Videoprojektors oder dergleichen, auf.

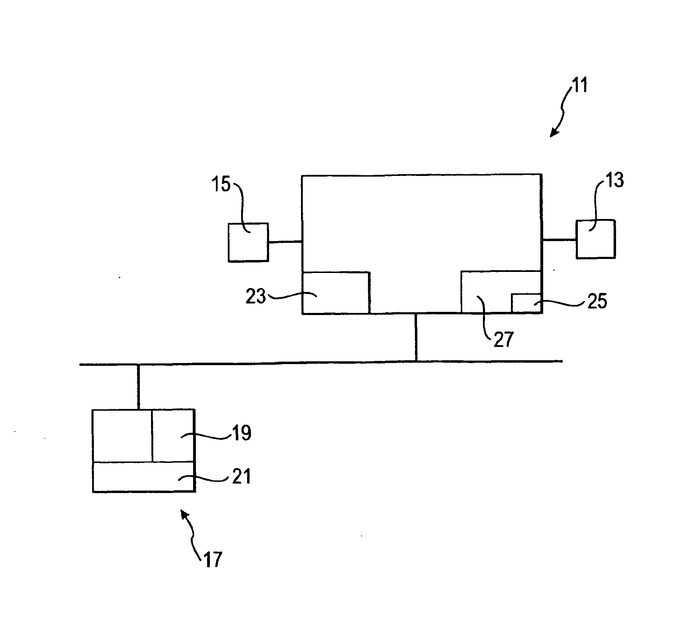

Vorteilhafte Ausführungsformen der Erfindung sind auch in den Unteransprüchen, der Figurenbeschreibung und der Zeichnung angegeben.

Ein nicht beschränkendes Ausführungsbeispiel der Erfindung ist in der Zeichnung dargestellt und wird nachfolgend beschrieben. Die einzige Figur der Zeichnung zeigt eine schematische Darstellung einer erfindungsgemäßen Wägeeinrichtung.

Die Wägeeinrichtung umfasst eine an einer Fleisch-, Wurst-, Käse- und/oder Fischtheke eines Supermarkts aufgestellte Ladenwaage 11, die durch einen Verkaufsmitarbeiter bedienbar ist. Die Ladenwaage bzw. das Waagenterminal 11 weist eine kombinierte Ein-/Ausgabeeinheit 13 in Form eines Touchscreens, ein Kunden-Display 15 und eine nicht dargestellte Wägezelle auf, die das Gewicht einer auf ihr liegenden Ware ermittelt und an eine Prozessoreinheit weitergibt, welche dazu ausgelegt ist, das Gewicht und den Preis der Ware auf dem Touchscreen 13 und dem Kunden-Display 15 anzuzeigen. Über den an die Prozessoreinheit angeschlossenen Touchscreen 13 kann eine der Ware zugeordnete Identifikationsnummer oder Produktkennzeichnung, z.B. eine PLU, in die Ladenwaage 11 eingegeben werden. Die Ladenwaage 11. weist ferner ein Netzteil zur Stromversorgung und einen Etikettendrucker auf.

Die Ladenwaage 11 ist mit einem computergestützten Warenwirtschaftssystem 19 verbunden. Bei dem Warenwirtschaftssystem 19 handelt es sich um eine Software, die aus verschiedenen Modulen zur Verwaltung und Auswertung von Artikelinformationen, Warengruppen, Auftrags- und Umsatzdaten besteht. Das Warenwirtschaftssystem 19 umfasst eine Warendatenbank 21 und ist auf einem Server 17 installiert. In der Warendatenbank 21 sind sämtliche in dem Supermarkt zum Verkauf angebotene Waren mittels einer jeweiligen PLU erfasst.

Darüber hinaus weist die Ladenwaage 11 eine lokale Datenbank 23 auf, in der digitale Medieninhalte hinterlegt sind, die an dem Kunden-Display 15 angezeigt werden können, wobei zumindest einem Teil der PLUs, bevorzugt jeder PLU, ein oder mehrere digitale Medieninhalte zugeordnet sind. Bei den digitalen Medieninhalten, die in Form von Containerdateien vorliegen, d.h. als Text-, Bild-, Audio- und/oder Videodaten, kann es sich beispielsweise um Rezepte, Bilder, Videoclips, Inhaltsdeklarationen und/oder um Werbeinformation zu die jeweilige Ware ergänzenden Produkten (Cross-Merchandising) handeln. Die digitalen Medieninhalte können gezielt zur Produkt- und Konsumentenberatung eingesetzt werden. Ein digitaler Medieninhalt kann auch mehreren voneinander verschiedenen PLUs zugeordnet sein.

Die Zuordnung erfolgt mittels wenigstens einer Tabelle, die in Form einer Datei 25 in einem Speicherbereich der Ladenwaage 11 hinterlegt ist. Bei der Datei 25 kann es sich beispielsweise um eine csv-, Excel- oder xml-Datei handeln. Die Datei 25 kann auch ausgetauscht werden. Der Anschluss an die Warendatenbank 21 bzw. das Warenwirtschaftssystem 19 erfolgt also über eine Schnittstelle mit einer oder mehreren Referenztabellen, um eine Hardware- bzw. Systemunabhängigkeit zu erreichen. Als generische Daten können zumindest die PLU und eine Abteilung (Hauptwarengruppe wie z.B. Käse, Fleisch, Fisch etc.) verwendet werden. Optional kann auch noch eine Filial-ID verwendet werden, d.h. je nach Filiale liegen unterschiedliche Mappings vor.

Grundsätzlich können die lokale Datenbank 23, die Datei 25 und/ oder ein nachstehend noch näher erläutertes Anwendungsprogramm 27 auch auf einem separaten Server hinterlegt sein, und kann das Anzeigen oder Abspielen der digitalen Medieninhalte auf dem Kunden-Display 15 der Ladenwaage 11 als Dienst im Rahmen einer Client-Server-Architektur zur Verfügung gestellt werden.

Nennt ein Kunde dem an der Theke tätigen Verkaufsmitarbeiter die zum Kauf gewünschte Ware, so gibt der Verkaufsmitarbeiter entweder den Namen der jeweiligen Ware im Klartext oder eine Kennung der Ware, insbesondere die PLU, an dem Touchscreen 13 ein, d.h. die jeweilige Produktkennzeichnung wird aufgerufen. Hieraufhin greift die Ladenwaage 11 auf die Warendatenbank 21 des Warenwirtschaftssystems 19 zu, um einen der jeweiligen Ware zugehörigen Preis bzw. einen Preis/Gewicht anzufragen. Anschließend kann der Preis der Ware an dem Touchscreen 13 und dem Kunden-Display 15 angezeigt werden.

Bei Aufruf der jeweiligen Produktkennzeichnung wird dem Verkaufsmitarbeiter auf dem Touchscreen 13 auch ein Menü mit einer Auswahl verschiedener digitaler Medieninhalte, die der jeweiligen Produktkennzeichnung zugeordnet sind, angezeigt. Bei den zugeordneten digitalen Medieninhalten kann es sich beispielsweise um Nährwertangaben, Informationen zu Allergenen und ein Rezept handeln. Der jeweilige, von dem Kunden gewünschte digitale Medieninhalt kann dann durch entsprechende Betätigung des Touchscreens 13 durch den Verkaufsmitarbeiter ausgewählt und nach einem entsprechenden Zugriff auf die lokale Datenbank 23 an dem Kunden-Display 15 angezeigt oder abgespielt werden.

Grundsätzlich ist es auch möglich, dass der Kunde die Auswahl angezeigt bekommt und den gewünschten digitalen Medieninhalt selbst auswählen kann. Darüber hinaus ist es auch möglich, dass durch das Warenwirtschaftssystem 19 vorgegeben wird, welcher der zugeordneten digitalen Medieninhalt ausgegeben werden soll, beispielsweise um einen schlecht gehenden Artikel mit höherer Priorität bzw. verstärkt zu bewerben. Hierbei ist es möglich, dass der auszugebende digitale Medieninhalt erst und zumindest vorübergehend in die vorhandene Zuordnung aufgenommen wird, wobei insbesondere der auszugebende digitale Medieninhalt dann durch einen entsprechenden "Prioritäts"-Filter bzw. eine entsprechende "Prioritäts"- Filterfunktion auswählbar ist.

Die Ladenwaage 11 umfasst ferner das bereits vorstehend erwähnte Anwendungsprogramm 27, das ermöglicht, die Datei 25 zu öffnen und anschließend die Zuordnung zu bearbeiten. Der Betreiber der Wägeeinrichtung kann mittels des Anwendungsprogramms 27 daher auf die Zuordnung zugreifen und diese ändern oder ergänzen, beispielsweise um neue digitale Medieninhalte einzubinden, um vorhandene digitale Medieninhalte durch neue digitale Medieninhalte zu ersetzen oder um einen bestimmten Artikel des Warensortiments durch vermehrte Verlinkung eines entsprechenden digitalen Dateninhalts verstärkt zu bewerben. Insbesondere hierfür können aus dem Warenwirtschaftssystem 19 Verkaufsdaten und Prognosen übernommen werden.

Es ist vorgesehen, dass die Zuordnung nach einer gewissen Logik automatisch und zeitabhängig erfolgt. Es können auch Gruppen von digitalen Inhalten einem Artikel bzw. einer Produktkennzeichnung oder einer Gruppe von Artikeln zugeordnet sein, die insbesondere über einen Zufallsgenerator ausgewählt werden können. Darüber hinaus können aber auch Filter oder Filterfunktionen vorgesehen sein, die eine zusätzliche ID bzw. Identifikation verwenden, um beispielsweise eine marken- oder herstellerspezifische Auswahl oder länderspezifische Auswahl (Italien-Woche, Französische Woche) oder Abwahl digitaler Dateninhalte zu ermöglichen.

Ferner erfolgt eine Protokollierung der Aufrufe der digitalen Medieninhalte, insbesondere Werbeinhalte, beispielsweise deren Anzahl und/oder Dauer, um deren Standzeit und/ oder Beliebtheit zu dokumentieren. Darüber hinaus ist eine Auswertung der Effektivität der Werbemaßnahmen vorgesehen, beispielsweise indem die Daten über die Werbemaßnahmen an das Warenwirtschaftssystem 19 zurückgespiegelt und dort statistisch ausgewertet werden. Alternativ kann die Auswertung in und/oder an der Ladenwaage 11 vorgenommen werden.

Durch die vorstehend erläuterte Wägeeinrichtung wird eine flexible Zuweisung der digitalen Dateninhalte zu den angebotenen Waren ermöglicht.

### Bezugszeichenliste

- 11: Ladenwaage
- 13: Touchscreen
- 15: Kunden-Display
- 17: Server
- 19: Warenwirtschaftssystem
- 21: Warendatenbank
- 23: lokale Datenbank
- 25: Datei
- 27: Anwendungsprogramm

## Patentansprüche

1. Wägeeinrichtung mit wenigstens einer Ladenwaage zum Bereitstellen von digitalen Dateninhalten, insbesondere Medieninhalten, zu in einem Einzelhandelsgeschäft zum Verkauf angebotenen Waren, wobei die Ladenwaage (11) dazu ausgelegt ist, sowohl auf eine Warendatenbank (21), insbesondere eines computergestützten Warenwirtschaftssystems (19), in der die Waren über eine jeweilige Produktkennzeichnung erfasst sind, als auch auf eine weitere Datenbank (23), in der die digitalen Dateninhalte hinterlegt sind, zuzugreifen,
wobei die Ladenwaage (11) Zuordnungsdaten (25) umfasst, die eine Zuordnung der digitalen Dateninhalte zu den jeweiligen Produktkennzeichnungen festlegen, wobei die Zuordnung bearbeitbar ist,
und
wobei die Ladenwaage (11) dazu ausgelegt ist, bei einem Aufruf einer Produktkennzeichnung unter Verwendung der Zuordnungsdaten (25) einen der aufgerufenen Produktkennzeichnung zugeordneten digitalen Dateninhalt aus der weiteren Datenbank (23) auszulesen, und den ausgelesenen digitalen Dateninhalt an einer Ausgabeeinheit (15) der Ladenwaage (11) auszugeben.

2. Wägeeinrichtung nach Anspruch 1,
**dadurch gekennzeichnet,**
**dass** die Ladenwaage (11) wenigstens einen Filter umfasst und dazu ausgelegt ist, den auszulesenden digitalen Dateninhalt in Abhängigkeit von dem Filter zu bestimmen.

3. Wägeeinrichtung nach Anspruch 2,
**dadurch gekennzeichnet,**
**dass** der jeweilige Filter eine Filterung nach wenigstens einem Attribut erlaubt.

4. Wägeeinrichtung nach zumindest einem der vorstehenden Ansprüche,
**dadurch gekennzeichnet,**
**dass** die Zuordnung derart ist, dass einer Produktkennzeichnung mehrere verschiedene digitale Dateninhalte zugeordnet sind.

5. Wägeeinrichtung nach Anspruch 4,
**dadurch gekennzeichnet,**
**dass** aus den mehreren verschiedenen zugeordneten digitalen Dateninhalten der jeweils auszulesende digitale Dateninhalt auswählbar ist.

6. Wägeeinrichtung nach Anspruch 5,
**dadurch gekennzeichnet,**
**dass** die Auswahl zufällig, automatisch, anhand wenigstens eines Filters, anhand einer insbesondere aus dem Warenwirtschaftssystem (19) vorgegebenen Priorisierung und/oder anhand einer Benutzereingabe erfolgt.

7. Wägeeinrichtung nach zumindest einem der vorstehenden Ansprüche,
**dadurch gekennzeichnet,**
**dass** die Zuordnung und/oder eine Auswahl des jeweils auszulesenden digitalen Dateninhalts zeitabhängig erfolgt.

8. Wägeeinrichtung nach zumindest einem der vorstehenden Ansprüche,
**dadurch gekennzeichnet,**
**dass** zur Ausbildung einer Filterfunktion zumindest ein Teil der digitalen Dateninhalte mit einem oder mehreren Attributwerten versehen ist.

9. Wägeeinrichtung nach zumindest einem der vorstehenden Ansprüche,
**dadurch gekennzeichnet,**
**dass** die Zuordnung derart ist, dass ein digitaler Dateninhalt mehreren verschiedenen Produktkennzeichnungen und/oder einer Gruppe von Produktkennzeichnungen, die ein gemeinsames Merkmal besitzen, insbesondere einer Warengruppe, wenigstens ein digitaler Dateninhalt zugeordnet ist.

10. Wägeeinrichtung nach zumindest einem der vorstehenden Ansprüche,
**dadurch gekennzeichnet,**
**dass** die Zuordnung mit einem Anwendungsprogramm (27) und/oder durch wenigstens einen Filter der Ladenwaage (11), insbesondere manuell oder automatisch, bearbeitbar ist.

11. Wägeeinrichtung nach zumindest einem der vorstehenden Ansprüche,
**dadurch gekennzeichnet,**
**dass** die Zuordnungsdaten in wenigstens einer Tabelle (25) hinterlegt sind.

12. Wägeeinrichtung nach Anspruch 11,
**dadurch gekennzeichnet,**
**dass** die wenigstens eine Tabelle in Form wenigstens einer Datei (25) vorliegt, wobei bevorzugt die wenigstens eine Datei (25) austauschbar ist.

13. Wägeeinrichtung nach zumindest einem der vorstehenden Ansprüche,
**dadurch gekennzeichnet,**
**dass** die Ladenwaage (11) dazu ausgelegt ist, zu protokollieren, welche digitalen Dateninhalte, insbesondere wie oft, ausgegeben wurden, wobei bevorzugt die Ladenwaage (11) dazu ausgelegt ist, das Protokoll statistisch auszuwerten und/oder an das Warenwirtschaftssystem (19) zu übermitteln.

14. Wägeeinrichtung nach zumindest einem der vorstehenden Ansprüche,
**dadurch gekennzeichnet,**
**dass** die digitalen Dateninhalte jeweils als Containerdateien vorliegen.

15. Wägeeinrichtung nach zumindest einem der vorstehenden Ansprüche,
**dadurch gekennzeichnet,**
**dass** die ausgelesenen digitalen Dateninhalte an einer insbesondere audiofähigen Anzeigeeinheit (15), insbesondere einem Bildschirm, einem Display oder einem Touchscreen, und/oder an einem insbesondere über eine Schnittstelle anbindbaren Drucker ausgebbar sind.

## Claims

1. A weighing device having at least one set of shop scales for providing digital data contents, in particular media contents, with respect to goods offered for sale in a retail business,
wherein the shop scales (11) are configured to access both a goods database (21), in particular of a computer-assisted inventory control system (19), in which the goods are entered via a respective product identification and a further database (23) in which the digital data contents are stored,
wherein the shop scales (11) comprise association data (25) which define an association of the digital data contents with the respective product identifications, with the association being editable, and wherein the shop scales (11) are configured to read out a digital data content associated with an accessed product identification from the further database (23) using the association data (25) on an access of the product identification and to output the read out digital data content to an output unit (15) of the shop scales (11).

2. A weighing device in accordance with claim 1,
**characterised in that**
the shop scales (11) include at least one filter and are configured to determine the digital data content to be read out in dependence on the filter.

3. A weighing device in accordance with claim 2,
**characterised in that**
the respective filter allows a filtering by at least one attribute.

4. A weighing device in accordance with at least one of the preceding claims,
**characterised in that**
the association is such that a plurality of different digital data contents are associated with one product identification.

5. A weighing device in accordance with claim 4,
**characterised in that**
the respective digital content to be read out can be selected from the plurality of different associated digital data contents.

6. A weighing device in accordance with claim 5,
**characterised in that**
the selection takes place randomly, automatically, with reference to at least one filter, with reference to a prioritisation, in particular a prioritisation predefined from the inventory control system (19), and/or with reference to a user input.

7. A weighing device in accordance with at least one of the preceding claims,
**characterised in that**
the association and/or a selection of the respective digital content to be read out takes place dependent on time.

8. A weighing device in accordance with at least one of the preceding claims,
**characterised in that**
at least some of the digital data contents are provided with one or more attribute values for forming a filter function.

9. A weighing device in accordance with at least one of the preceding claims,
**characterised in that**
the association is such that a digital data content is associated with a plurality of different product identifications and/or that at least one digital data content is associated with a group of product identifications which have a common feature, in particular a goods group.

10. A weighing device in accordance with at least one of the preceding claims,
**characterised in that**
the association can be edited, in particular manually or automatically, by an application program (27) and/or by at least one filter of the shop scales (11).

11. A weighing device in accordance with at least one of the preceding claims,
**characterised in that**
the association data are stored in at least one table (25).

12. A weighing device in accordance with claim 11,
**characterised in that**
the at least one table is present in the form of at least one file (25), with the at least one file (25) preferably being exchangeable.

13. A weighing device in accordance with at least one of the preceding claims,
**characterised in that**
the shop scales (11) are configured to record which digital data contents are output, in particular how often, with the shop scales (11) preferably being configured to evaluate the record statistically and/or to transfer it to the inventory control system (19).

14. A weighing device in accordance with at least one of the preceding claims,
**characterised in that**
the digital data contents are each present as container files.

15. A weighing device in accordance with at least one of the preceding claims,
**characterised in that**
the read out digital data contents can be output at a display unit (15), in particular an audio-capable display unit, in particular a monitor, a display or a touch screen, and/or at a printer, in particular a printer which can be connected via an interface.

## Revendications

1. Système de pesage comprenant au moins une balance commerciale pour mettre à disposition des contenus de données numériques, en particulier des contenus de média, concernant des marchandises offertes à la vente dans un magasin de commerce individuel, dans lequel la balance commerciale (11) est conçue pour faire appel aussi bien à une base de données de marchandises (21), en particulier d'un système de gestion de marchandises assisté par ordinateur (19), dans lequel les produits sont saisis via une désignation de produit respective, qu'à une autre base de données (23) dans laquelle sont mémorisés les contenus de données numériques,
dans lequel la balance commerciale (11) inclut des données d'association (25) qui fixent une association des contenus de données numériques et des désignations de produits respectives, ladite association pouvant être modifiée, et
dans lequel la balance commerciale (11) est conçue, lors d'un appel d'une désignation de produit et en utilisant les données d'association (25), pour lire un contenu de données numériques associé à la désignation de produit appelée à partir de l'autre base de données (23), et de sortir le contenu de données numériques lu au niveau d'une unité de sortie (15) de la balance commerciale (11).

2. Système de pesage selon la revendication 1,
**caractérisé en ce que** la balance commerciale (11) inclut au moins un filtre et est conçue pour déterminer le contenu de données numériques à lire en fonction du filtre.

3. Système de pesage selon la revendication 2,
**caractérisé en ce que** le filtre respectif permet un filtrage selon au moins un attribut.

4. Système de pesage selon l'une au moins des revendications précédentes,
**caractérisé en ce que** l'association est telle que plusieurs contenus de données numériques différents sont associés à une désignation de produit.

5. Système de pesage selon la revendication 4,
**caractérisé en ce que** le contenu de données numériques respectif à lire peut être sélectionné à partir des plusieurs contenus de données numériques associés différents.

6. Système de pesage selon la revendication 5,
**caractérisé en ce que** la sélection a lieu de manière aléatoire, automatique, au moyen d'au moins un filtre, au moyen d'une priorité, en particulier imposé par le système de gestion de marchandises (19), et/ou au moyen d'une saisie de la part d'un utilisateur.

7. Système de pesage selon l'une au moins des revendications précédentes,
**caractérisé en ce que** l'association et/ou une sélection du contenu de données numériques respectif à lire a lieu en fonction du temps.

8. Système de pesage selon l'une au moins des revendications précédentes,
**caractérisé en ce que** pour la réalisation d'une fonction de filtrage, au moins une partie des contenus de données numériques est dotée d'une ou plusieurs valeurs attribut.

9. Système de pesage selon l'une au moins des revendications précédentes,
**caractérisé en ce que** l'association est telle qu'un contenu de données numériques est associé à plusieurs désignations de produits différentes et/ou qu'au moins un contenu de données numériques est associé à un groupe de désignations de produits, qui possèdent une caractéristique commune, en particulier à un groupe de marchandises.

10. Système de pesage selon l'une au moins des revendications précédentes,
**caractérisé en ce que** l'association est modifiable avec un programme d'application (27) et/ou par au moins un filtre de la balance commerciale (11), en particulier de manière manuelle ou automatique.

11. Système de pesage selon l'une au moins des revendications précédentes,
**caractérisé en ce que** les données d'association sont mémorisées dans au moins un tableau (25).

12. Système de pesage selon la revendication 11,
**caractérisé en ce que** ledit au moins un tableau se présente sous la forme d'au moins un fichier (25), ledit au moins un fichier (25) étant de préférence interchangeable.

13. Système de pesage selon l'une au moins des revendications précédentes,
**caractérisé en ce que** la balance commerciale (11) est conçue pour dresser un compte-rendu de ceux des contenus de données numériques qui ont été sortis, en particulier combien de fois, et la balance commerciale (11) est de préférence conçue pour évaluer le compte-rendu de manière statistique et/ou pour le transmettre au système de gestion de marchandises (19).

14. Système de pesage selon l'une au moins des revendications précédentes,
caractérisé en en ce que les contenus de données numériques se présentent respectivement sous la forme de format conteneur.

15. Système de pesage selon l'une au moins des revendications précédentes,
**caractérisé en ce que** les contenus de données numériques lu sont susceptibles d'être sortis au niveau d'une unité d'affichage (15), en particulier avec fonction audio, en particulier un écran, un affichage ou un écran tactile, et/ou au niveau d'une imprimante susceptible d'être connectée via une interface.
